# EUROPEAN PATENT APPLICATION

(11) **EP 3 187 451 A1**
(43) Date of publication of application: **05.07.2017**
(21) Application number: 16150056.6
(22) Date of filing: 04.01.2016
(51) Int. Cl.: B66B 7/08

(54) **METHOD FOR MANUFACTURING A ROPE TERMINAL EQUIPMENT, METHOD FOR MANUFACTURING A ROPE TERMINAL ARRANGEMENT AND ELEVATOR**

(71) Applicant: KONE Corporation, 00330 Helsinki (FI)
(72) Inventor: Lehtinen, Hannu, 00330 Helsinki (FI); Lampinen, Riku, 00330 Helsinki (FI)
(74) Representative: Kolster Oy Ab

(57) **Abstract**

The invention relates to a method for manufacturing a rope terminal equipment of a hoisting device, comprising extruding (100) a profile bar (1;11a,11b;21); and cutting (200) a wedge shaped piece (2;12a,12b;22a,22b) from the extruded profile bar (1;11a,11b;21) ; and providing (300) a rope terminal frame (F) comprising a tapering nest (N) suitable for accommodating an end (E) of a rope (R) and said wedge shaped piece (2;12a,12b;22a,22b). The invention also relates to a method for manufacturing a rope terminal arrangement (A) of a hoisting device and to an elevator, which implement said method for manufacturing a rope terminal equipment.

## Description

### FIELD OF THE INVENTION

The invention relates to a method for manufacturing a rope terminal equipment of a hoisting device, to a method for manufacturing a rope terminal arrangement of a hoisting device, and to an elevator. Said hoisting device is preferably an elevator for vertically transporting passengers and/or goods.

### BACKGROUND OF THE INVENTION

In elevators, one or more ropes are used as the means by which the load to be hoisted is suspended. Each rope end needs to be fixed to a fixing base, which is typically either the load to be lifted or a stationary structure, depending on the type of suspension chosen for the elevator. The rope ends can be fixed directly to the load, such as the car or counterweight, which is the case when these are to be suspended with 1:1 ratio. Alternatively, the rope ends can be fixed to a stationary structure of the building, which is the case when the car and counterweight are to be suspended with 2:1 ratio, for instance.

Ropes of an elevator ropes are normally either belt-shaped or round in cross section. Each elevator rope typically includes one or more load bearing members that are elongated in the longitudinal direction of the rope, each forming a structure that continues unbroken throughout the length of the rope. Load bearing members are the members of the rope which are able to bear together the load exerted on the rope in its longitudinal direction. The load, such as a weight suspended by the rope, causes tension on the load bearing member, which tension can be transmitted by the load bearing member in question all the way from one end of the rope to the other end of the rope. Ropes may further comprise non-bearing components, such as a coating, which cannot transmit tension in the above described way. The coating can be utilized for protection of the load bearing members and/or facilitating contact with rope wheels and/or for positioning adjacent load bearing members relative to each other, for example. Belt-shaped ropes may have only one load bearing member, but often they include several of said load bearing members positioned by the coating adjacent each other in width direction of the rope.

In prior art, elevator ropes have been fixed to the fixing base with a rope terminal arrangement. The rope structure limits the way in which it can be engaged. Uncoated ropes containing metallic load bearing members can typically be fixed relatively freely without risk of severe rope damage. Ropes that have load bearing members made of brittle material and/or a coating, however, cannot be fixed as freely. Load bearing members may be sensitive to bending, and the material of the coating and/or the material of the load bearing members cannot withstand great local compression. Such rope terminal arrangements have been proposed, for example in US2014/0182975A1, wherein the rope end is compressed in a gap delimited by a wedge shaped piece (also referred to as a wedge member) on one or both sides of the rope. The wedge member is movable in a tapering nest of a rope terminal frame to wedge between a wall of the tapering nest and an end of a rope placed into the tapering nest to compress the end of the rope so as to lock the end of the rope immovably into the nest relative to the rope terminal frame. Reliability of this sort of arrangement relies largely on the grip produced by the compression between the rope surface and the compression member. The rope end should be firmly gripped such that it is not able to slide out of the compression gap, because this would mean that the suspension of the particular rope would be lost. Therefore, for facilitating safety, it is advantageous to ensure good grip.

In prior art, the wedge members have been manufactured by providing a block and machining the desired final shape therefrom. Nowadays, the whole wedge member is machined, including the uneven surface pattern, such as knurling, if this is to be utilized. Machining is laborious, often difficult and for these reasons expensive.

Machining process in practice also limits the exact shape of the surface pattern. For example, currently there are limitations in the maximum number of "grooves" vs. the depth of one groove. Having a deep groove would have advantageous effect on the terminal holding capability especially in high temperature, but this is not possible with the current manufacturing method.

In prior art, the wedge members have been made from steel. With this material, the friction is relatively high, and there are some risks of corrosion and the compression member getting stuck to the frame accommodating the wedge member, if no additional measures to avoid these challenges are taken.

### BRIEF DESCRIPTION OF THE INVENTION

The object of the invention is to introduce an improved method for manufacturing a rope terminal equipment of a hoisting device, an improved method for manufacturing a rope terminal arrangement of a hoisting device, and an improved elevator. The object of the invention is particularly to eliminate one or more of the drawbacks of prior art discussed above and/or to solve problems discussed or implied elsewhere in the description. An object is particularly to introduce a solution by which wedge shaped pieces of a rope terminal equipment of a hoisting device are manufactured simply and cost-effectively. Embodiments are presented, inter alia, where wedge shaped pieces of a rope terminal equipment of a hoisting device can be provided with an uneven surface pattern simply and cost-effectively. Embodiments are presented, inter alia, where the wedge shaped pieces of a rope terminal equipment of a hoisting device can be provided simply and cost-effectively with relatively good corrosion resistance and friction properties.

It is brought forward a new method for manufacturing a rope terminal equipment of a hoisting device, comprising extruding a profile bar; and cutting a wedge shaped piece from the extruded profile bar, in particular for forming a wedge shaped compression member to be wedged to compress an end of a rope; and providing a rope terminal frame comprising a tapering nest suitable for accommodating an end of a rope and said wedge shaped piece. With this solution one or more of the above mentioned objects are achieved. Preferable further details are introduced in the following, which further details can be combined with the device individually or in any combination.

In a preferred embodiment, the method further comprises mounting the wedge shaped piece in the tapering nest of the rope terminal frame, in particular such that it is movable in the tapering nest to wedge between a wall of the tapering nest and an end of a rope placed into the tapering nest to compress the end of the rope so as to lock the end of the rope immovably into the nest relative to the rope terminal frame.

In a preferred embodiment, in said extruding the profile bar is extruded of metal material, such as of aluminum or aluminum alloy.

In a preferred embodiment, in said extruding the profile bar is extruded of aluminum or aluminum alloy.

In a preferred embodiment, the wedge shaped piece comprises on opposite sides a first wedge face and a second wedge face which are planar and at an acute angle (alfa) relative to each other. The first wedge face of the wedge shaped piece is preferably a face for being placed against a rope and the second wedge face is a face for being placed against an inner wall of the tapered nest to slide against it for enabling wedging.

In a preferred embodiment, at least one wedge face of the wedge shaped piece is provided with an uneven surface pattern.

In a preferred embodiment, said profile bar comprises one or more planar lateral faces i.e. a faces that face in transverse direction of the profile bar.

In a preferred embodiment, the wedge shaped piece is cut from the extruded profile bar such that at least one wedge face of the wedge shaped piece is a section of a planar lateral face of the profile bar. Thus, the wedge shaped piece can be manufactured without extensive amount of cutting. Thus, it is also made possible that the profile bar can be shaped in the extrusion stage such that the section(s) of the planar lateral face(s) of the profile bar are advantageously shaped for forming a wedge face. For example, by extrusion it is simple to manufacture a planar lateral face with an uneven surface pattern, e.g. comprising elongated ridges and valleys between the ridges for facilitating engagement with a rope and/or a planar lateral face which is smooth for facilitating unobstructed sliding.

In a preferred embodiment, said at least one lateral face of the profile bar is provided with an uneven surface pattern.

In a preferred embodiment, said uneven surface pattern comprises elongated ridges and valleys between the ridges, which ridges and valleys extend in the longitudinal direction of the extruded profile bar, wherein the length direction is the extrusion direction.

In a preferred embodiment, said uneven surface pattern is a toothing or a polyvee or a knurling -pattern.

In a preferred embodiment, according to a first kind, said profile bar has a wedge-shaped cross-section. Preferably, in this embodiment in said cutting the wedge shaped piece is cut from an end of the extruded profile bar. Preferably, in this embodiment said profile bar has a wedge-shaped cross-section, and in said cutting the wedge shaped piece is cut from the extruded profile bar along a plane that is at least substantially orthogonal relative to the longitudinal direction of the profile. Preferably, in this embodiment said profile bar comprises on opposite sides a first planar lateral face and a second planar lateral face, facing in transverse direction of the profile bar, which first planar lateral face and a second planar lateral face of the profile bar are at an acute angle (alfa) relative to each other. The angle is preferably less than 45 degrees, more preferably between 2 and 30 degrees, more preferably between 2 and 20 degrees, most preferably between 3 and 15 degrees

In a preferred embodiment, according to a second kind, said profile bar, here referred to as the first profile bar, has a wedge-shaped cross-section and the method further comprises extruding a second profile bar which second profile bar has a second wedge-shaped cross-section, wherein said wedge-shaped cross-sections of the first and second profile bar are joinable together such that they together form a larger wedge-shaped cross-section; and said cutting comprising cutting a wedge shaped piece from each extruded profile bar; and joining a wedge shaped piece from the first profile bar with a wedge shaped piece from the second profile bar such that they together form a larger wedge shaped piece. The manufacturing of the wedge shaped pieces is preferably more specifically as described in the preceding paragraph. In said mounting the wedge shaped pieces are mounted in the tapering nest of the rope terminal frame such that they are movable as one unit in the tapering nest to wedge between a wall of the tapering nest and an end of a rope placed into the tapering nest to compress the end of the rope so as to lock the end of the rope immovably into the nest relative to the rope terminal frame.

In a preferred embodiment, according to a third kind, in said cutting the extruded profile bar is cut in cross-direction of the profile along a plane that extends diagonally relative to the longitudinal direction of the profile bar, thereby splitting the extruded profile bar in two wedge shaped pieces. Preferably, said profile bar comprises on opposite sides a first lateral face and a second lateral face, which are planar. Preferably, one or both of the lateral faces has an uneven surface pattern, the uneven surface pattern preferably comprising elongated ridges and valleys between the ridges, which ridges and valleys extend in the longitudinal direction of the extruded profile piece, wherein the length direction is the extrusion direction of the profile bar.

It is also brought forward a new method for manufacturing a rope terminal arrangement of a hoisting device comprising manufacturing a rope terminal equipment of a hoisting device as defined in any of the preceding claims; and mounting an end of a rope and said wedge shaped piece into the tapering nest of the rope terminal frame; and wedging the wedge shaped piece in the tapering nest, particularly between a wall of the tapering nest and the end of the rope, to compress the end of the rope locking the end of the rope into the tapering nest immovably relative to the rope terminal frame. With this solution one or more of the above mentioned objects are achieved. Preferable further details are introduced in the following, which further details can be combined with the device individually or in any combination.

In a preferred embodiment, in said mounting, the end of a rope and said wedge shaped piece are mounted into the tapering nest of the rope terminal frame such that a wedge face of the wedge shaped piece is placed against the end of the rope.

In a preferred embodiment, the wedge face placed against the rope is planar. Thereby the end of the rope compressed by the wedge face is not bent into a curved form

In a preferred embodiment, the wedge face placed against a rope has an uneven surface pattern, such as a toothing or a polyvee or a knurling -pattern. Thus, firmness of the engagement with the rope can be facilitated.

In a preferred embodiment, the wedge face of the wedge shaped piece placed against a rope is a section of a lateral face of the profile bar.

In a preferred embodiment, the hoisting device is an elevator.

In a preferred embodiment, the method comprises mounting the rope terminal frame on a fixing base.

In a preferred embodiment, the fixing base is an elevator car-counterweight-or a stationary structure of the building wherein the elevator is installed.

In a preferred embodiment, the rope is a suspension rope of the elevator.

In a preferred embodiment, the rope is belt-shaped.

In a preferred embodiment, the rope is coated.

In a preferred embodiment, the rope comprises one or more elongated load bearing members embedded in a coating forming the outer surface of the rope and extending parallel with the longitudinal direction of the rope unbroken throughout the length of the rope.

In a preferred embodiment, the load bearing members are made of composite material comprising reinforcing fibers embedded in polymer matrix (m), said reinforcing fibers preferably being carbon fibers.

In a preferred embodiment, the reinforcing fibers are distributed at least substantially evenly in polymer matrix m and bound to each other by the polymer matrix.

In a preferred embodiment, the width/thickness ratio of the rope is more than two, preferably more than 4.

In a preferred embodiment, the reinforcing fibers are not twisted together. Instead, it is preferable that the reinforcing fibers of each load bearing member are parallel with the longitudinal direction of the load bearing member. Thereby the fibers are also parallel with the longitudinal direction of the rope as each load bearing member is oriented parallel with the longitudinal direction of the rope. This facilitates further the longitudinal stiffness of the rope.

In a preferred embodiment, the coating is made of polymer material, such as polyurethane, rubber or silicon.

In a preferred embodiment, the tapering nest tapers towards an opening through which the rope can pass. In the mounting an end of a rope and said wedge shaped piece into the tapering nest of the rope terminal frame, the rope end is arranged to pass through said opening.

In a preferred embodiment, In said wedging the wedge shaped piece and the rope end are wedged in the wedge shaped space such that they are immovable relative to the wedge frame towards said opening.

It is also brought forward a new elevator, which comprises a rope terminal arrangement obtained with a method described anywhere above or later described in the application, the rope terminal arrangement fixing an end of a rope of the elevator to a fixing base. With this solution one or more of the above mentioned objects are achieved. Preferable further details are introduced in the following, which further details can be combined with the device individually or in any combination.

The elevator is preferably such that the car thereof is arranged to serve two or more landings. The elevator preferably controls movement of the car in response to signals from user interfaces located at landing(s) and/or inside the car so as to serve persons on the landing(s) and/or inside the elevator car. Preferably, the car has an interior space suitable for receiving a passenger or passengers, and the car can be provided with a door for forming a closed interior space.

### BRIEF DESCRIPTION OF THE DRAWINGS

In the following, the present invention will be described in more detail by way of example and with reference to the attached drawings, in which
Figure 1 illustrates steps of the method for manufacturing a rope terminal equipment of a hoisting device.
Figure 2 illustrates preferred details for steps of the method, in accordance with a first embodiment.
Figures 3-4 illustrate preferred details of the method for manufacturing a rope terminal equipment of a hoisting device, a rope terminal equipment of a hoisting device and a rope terminal arrangement of a hoisting device.
Figures 5-7 illustrate preferred details for steps of the method, in accordance with a second embodiment.
Figure 8 illustrates preferred details for steps of the method, in accordance with a third embodiment.
Figure 9 illustrates a first embodiment of an elevator implementing a rope terminal equipment of a hoisting device and a rope terminal arrangement of a hoisting device manufactured with the method according to the invention.
Figure 10 illustrates a second embodiment of an elevator implementing a rope terminal equipment of a hoisting device and a rope terminal arrangement of a hoisting device manufactured with the method according to the invention.
Figure 11 illustrates a preferred cross-section of the rope.
Figures 12 and 13 illustrate preferred details of the load bearing member of the rope.

The foregoing aspects, features and advantages of the invention will be apparent from the drawings and the detailed description related thereto.

### DETAILED DESCRIPTION

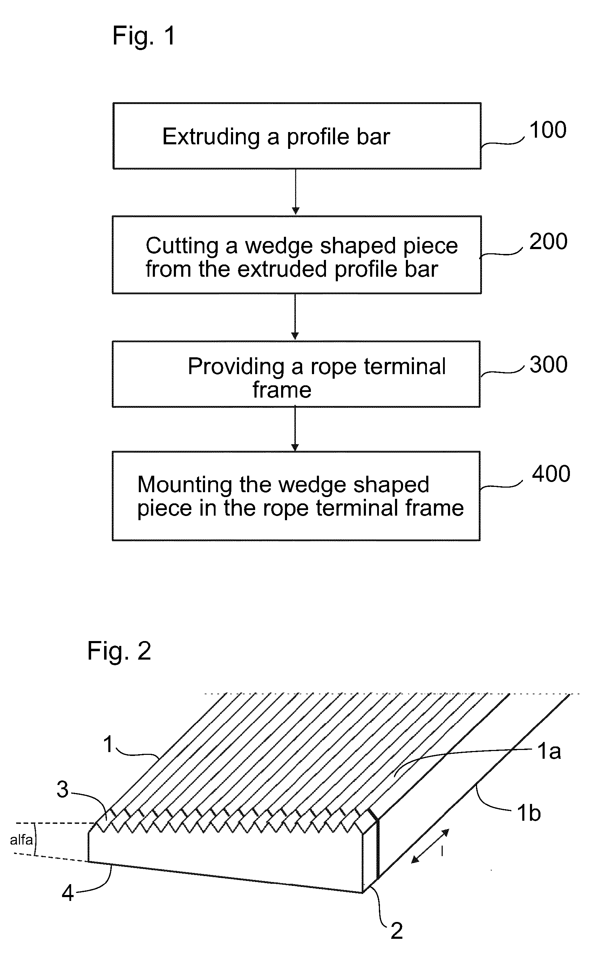

Figure 1 illustrates steps of a method for manufacturing a rope terminal equipment of a hoisting device in accordance to a preferred embodiment. The hoisting device is preferably an elevator but might alternatively be a crane or the like. The method comprises a step 100 wherein a profile bar is extruded, and a step 200 wherein a wedge shaped piece is cut from the extruded profile bar, which wedge shaped piece forms a wedge shaped compression member to be wedged to compress an end of a rope. The method further comprises a step 300 wherein a rope terminal frame comprising a tapering nest suitable for accommodating an end of a rope and said wedge shaped piece is provided. After this, the method preferably further comprises a step 400, as illustrated, wherein the wedge shaped piece is mounted in the tapering nest of the rope terminal frame, in particular such that it is movable in the tapering nest to wedge between a wall of the tapering nest and an end of a rope placed into the tapering nest to compress the end of the rope so as to lock the end of the rope immovably into the nest relative to the rope terminal frame.

Figure 2 illustrates preferred details for the steps 100 and 200 of the above described method, in accordance with a first embodiment. In this case, a profile bar 1, illustrated in Figure 2 is extruded, and thereafter a wedge shaped piece 2 is cut from the extruded profile bar 1 for forming a wedge shaped compression member of the rope terminal equipment to be wedged to compress an end E of a rope R. The cutting line is presented in the Figure. The extruded profile bar 1 has a cross-section constant along the longitudinal direction of the extruded profile bar, wherein the length direction l is the extrusion direction. The profile bar 1 can have any length, but preferably it is long enough that several wedge shaped pieces 2 can be cut therefrom. Thereby several wedge shaped pieces 2 can be mass-produced from one profile bar 1.

In the embodiment illustrated in Figure 2, said profile bar 1 has wedge-shaped cross-section, and in said cutting the wedge shaped piece 2 is cut from an end of the extruded profile bar 1. In said extruding 100, said profile bar 1 is extruded to comprise on opposite sides a first lateral face 3 and a second lateral face 4, i.e. faces that face in transverse direction of the profile bar 1. The first lateral face 3 and the second lateral face 4 are planar and at an acute angle (alfa) relative to each other. In said cutting 200, the wedge shaped piece 2 is cut from the extruded profile bar 1 such that the wedge faces 3,4 of the wedge shaped piece 2 are sections of planar lateral faces 3,4 of the profile bar 1. In the present case, the wedge shaped piece 2 is cut from the extruded profile bar 1 along a plane that is orthogonal relative to the longitudinal direction l of the profile 1. Said angle (alfa) is preferably less than 45 degrees, more preferably between 2 and 30 degrees, more preferably between 2 and 20 degrees, most preferably between 3 and 15 degrees. It results, that the wedge shaped piece 2 cut from an end of the extruded profile piece comprises on opposite sides a first wedge face 3 and a second wedge face 4 which are planar and at said acute angle (alfa) relative to each other. With this angle, the wedge shaped piece 2 is well suitable for serving as a compression member of a hoisting device. In the preferred embodiment, one of said planar lateral faces 3,4 of the profile bar 1 has an uneven surface pattern P. Said uneven surface pattern P comprises elongated ridges and valleys between the ridges, which ridges and valleys extend in the longitudinal direction of the extruded profile bar 1, wherein the length direction is the extrusion direction. The uneven surface pattern P in this case is a knurling -pattern. The surface pattern P could alternatively be a toothing -pattern or a polyvee -pattern matching with the outer shape of the rope R.

Using extrusion, it is provided that one of the planar lateral faces 3,4 of the profile bar 1 can be given an uneven surface pattern P simply and without extensive machining. It results, that one 3 of the wedge faces 3,4 of the wedge shaped piece 2 cut from an end of the extruded profile piece 1 also has an uneven surface pattern P. Thus, also the wedge shaped piece 2 can be made to have an uneven surface pattern P simply and without extensive machining. The first wedge face 3 of the wedge shaped piece 2 is a face for being placed against a rope R and the second wedge face 4 is a face for being placed against an inner wall of a tapered nest N to slide against it for enabling wedging. The first wedge face 3 of the wedge shaped piece 2 cut the extruded profile piece 1 has preferably an uneven surface pattern as disclosed. The second wedge face 4 is preferably smooth as disclosed, because thus it can slide without obstructions against another surface. Said wedge face 3 being in the preferred embodiment planar, albeit is can comprise an uneven surface pattern P, provides that it can simply exert compression force on a rope R without bending it into a curved form. Owing to the planar construction, a wide contact area and thereby a gentle gripping can be established between the rope R and the wedge shaped piece. The rope R is thus also maintained straight. Planar construction is particularly advantageous if the rope is coated and thereby unable to withstand great point loads, but also if the load bearing members are brittle and thereby sensitive to bending and high point loads as well.

In the foregoing, the wedge shaped piece is to have an uneven surface pattern. However, the described manufacturing can of course be utilized also if uneven surface patterns are not to be used, in which case the planar lateral faces 3,4 of the profile bar can be shaped smooth so as to achieve smooth wedge faces 3,4 for the wedge shaped piece 2.

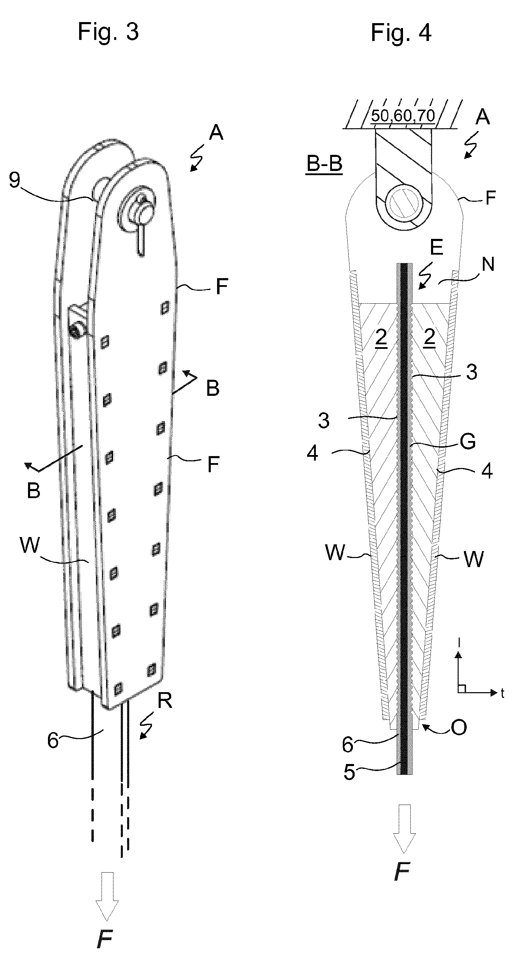

As mentioned, the method comprises a step 300 of providing a rope terminal frame. A preferred construction for the rope terminal frame F is illustrated in Figures 3 and 4, wherein the rope terminal frame F comprises a tapering nest N suitable for accommodating an end E of a rope R and said wedge shaped piece 2. After this, the method comprises a step 400 of mounting the wedge shaped piece 2 in the tapering nest N of the rope terminal frame F, in particular such that it is movable in the tapering nest N to wedge between a wall W of the tapering nest N and an end E of a rope R placed into the tapering nest to compress the end of the rope so as to lock the end of the rope immovably into the nest relative to the rope terminal frame. Figures 3 and 4 illustrate the details of the solution in a state where the rope end E has been mounted in the tapered nest N, and wedged immovably using the wedge shaped piece 2. The tapering nest N tapers towards an opening O through which the rope R can pass. In the mounting 400 the end E of the rope R is arranged to pass through said opening O.

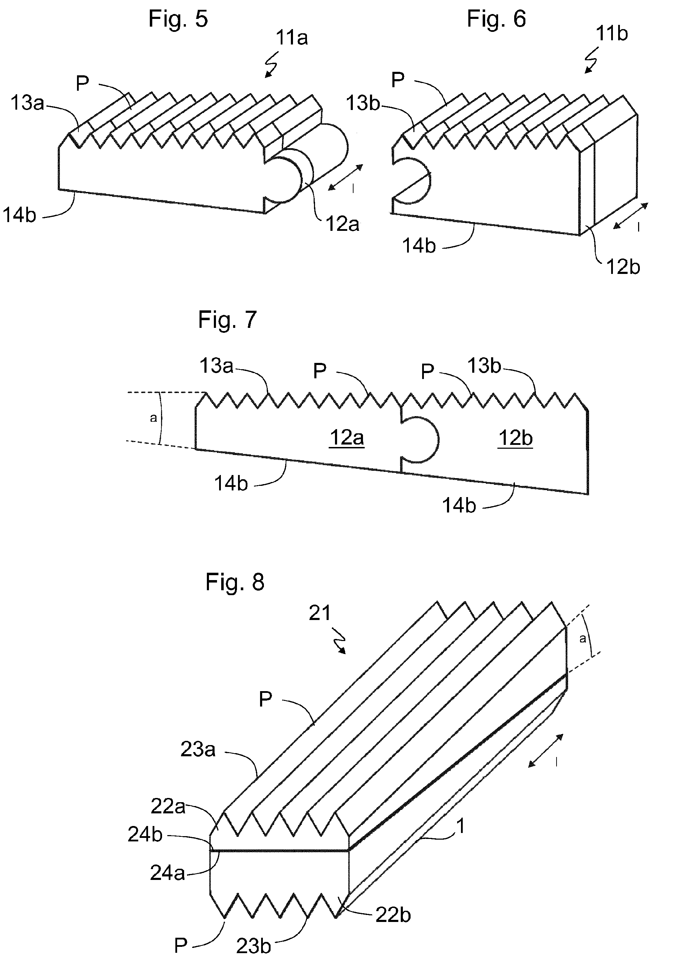

Figures 5 to 7 illustrate preferred details for the steps 100 and 200 of the above described method, in accordance with a second embodiment. In this case, a profile bar 11a illustrated in Figure 5 is extruded, and thereafter a wedge shaped piece 12a is cut from the extruded profile bar 11a which wedge shaped piece 12a forms a wedge shaped compression member of the rope terminal equipment to be wedged to compress an end of a rope R. The cutting line is presented in the Figure. The profile bar 11a can have any length, but preferably it is long enough that several wedge shaped pieces 12a can be cut therefrom. The extruded profile bar 11a has a cross-section constant along the longitudinal direction of the extruded profile bar, wherein the length direction l is the extrusion direction. Additionally, a second profile bar 11b illustrated in Figure 6 is extruded which second profile bar 11b has a second wedge-shaped cross-section, wherein said wedge-shaped cross-sections are joinable together such that they together form a larger wedge-shaped cross-section. Thereafter, the second wedge shaped piece 12b is cut from the extruded profile bar 11b which wedge shaped piece 12b forms a second wedge shaped compression member of the rope terminal equipment to be wedged to compress an end of a rope R. The cutting line is presented in the Figure. The profile bar 11b can have any length, but preferably it is long enough that several wedge shaped pieces 12b can be cut therefrom. After the wedge shaped pieces 12a,12b are cut, a wedge shaped piece 12a from the first profile bar 11a is joined with a wedge shaped piece 12b from the second profile bar 11b such that they together form a larger wedge shaped piece. Thereby these wedge shaped compression members together form a larger two-part compression member. In the preferred embodiment, said wedge-shaped cross-sections form a pair of male and female -shapes that are joinable together by shape locking.

Each said wedge shaped pieces 12a,12b can be manufactured correspondingly as described above in context of Figure 2. Accordingly, in said extruding 100, each said profile bar 11a,11b is extruded to have a wedge-shaped cross-section, and in said cutting the wedge shaped piece 12a,12b is cut from an end of the extruded profile bar 11a,11b. Accordingly, in said extruding 100, each said profile bar 11a,11b is extruded to comprise on opposite sides a first lateral face 13a,13b and a second lateral face 14a,14b, i.e. faces that face in transverse direction of the profile bar 1. The first lateral face 13a,13b and the second lateral face 14a,14b are planar and at an acute angle (alfa) relative to each other.

In said cutting 200, each wedge shaped piece 12a,12b is cut from the extruded profile bar 11a,11b such that the wedge faces 13a, 14a ; 13b,14b of the wedge shaped piece 12a,12b are sections of planar lateral faces 13a, 14a ; 13b,14b of the profile bar 11a,11b. In the present case, the wedge shaped piece 12a,12b is cut from the extruded profile bar 11a,11b along a plane that is orthogonal relative to the longitudinal direction l of the profile bar 11a,11b. Said angle (alfa) is preferably less than 45 degrees, more preferably between 2 and 30 degrees, more preferably between 2 and 20 degrees, most preferably between 3 and 15 degrees. It results, that the wedge shaped piece 12a,12b cut from an end of the extruded profile piece comprises on opposite sides a first wedge face 13a,13b and a second wedge face 14a,14b which are planar and at said acute angle (alfa) relative to each other. With this angle, the wedge shaped piece 12a,12b is well suitable for serving as a compression member of a hoisting device. In the preferred embodiment, one of said planar lateral faces 13a, 14a ; 13b,14b of the profile bar 11a,11b has an uneven surface pattern P. Said uneven surface pattern P comprises elongated ridges and valleys between the ridges, which ridges and valleys extend in the longitudinal direction of the extruded profile bar 11a,11b, wherein the length direction is the extrusion direction. The uneven surface pattern P in this case is a knurling -pattern. The surface pattern P could alternatively be a toothing -pattern or a polyvee - pattern matching with the outer shape of the rope R.

Using extrusion, it is provided that one of the planar lateral faces 13a, 14a ; 13b,14b of each profile bar 11a,11b can be given an uneven surface pattern P simply and without extensive machining. It results, that one 13a,13b of the wedge faces 13a, 14a ; 13b,14b of the wedge shaped piece 12a,12b cut from an end of the extruded profile bar 11a,11b also has an uneven surface pattern P. Thus, also the wedge shaped piece 2 can be made to have an uneven surface pattern P simply and without extensive machining. The first wedge face 13a,13b of the wedge shaped piece 12a,12b is a face for being placed against a rope R and the second wedge face 14a,14b is a face for being placed against an inner wall of a tapered nest N to slide against it for enabling wedging. The first wedge face 13a,13b of the wedge shaped piece 12a,12b cut the extruded profile bar 11a,11b has preferably an uneven surface pattern P as disclosed. The second wedge face 14a,14b is preferably smooth as disclosed, because thus it can slide without obstructions against another surface. The first wedge face 13a,13b being in the preferred embodiment planar, albeit is can comprise an uneven surface pattern P, provides that it can simply exert compression force on a rope R without bending it into a curved form. Owing to the planar construction, a wide contact area and thereby a gentle gripping can be established between the rope R and each wedge shaped piece. The rope R is thus also maintained straight. Planar construction is particularly advantageous if the rope is coated and thereby unable to withstand great point loads, but also if the load bearing members are brittle and thereby sensitive to bending and high point loads as well.

In the foregoing, each wedge shaped piece is to have an uneven surface pattern. However, the described manufacturing can of course be utilized also if uneven surface patterns are not to be used, in which case the planar lateral faces 13a,13;14a,14b of the profile can be shaped smooth so as to achieve smooth wedge faces 13a,13;14a,14b for the wedge shaped pieces.

As mentioned, the method comprises a step 300 of providing a rope terminal frame. A preferred construction for the rope terminal frame F is illustrated in Figures 3 and 4, wherein the rope terminal frame F comprises a tapering nest N suitable for accommodating an end E of a rope R and said wedge shaped pieces 12a,12b. After this, the method comprises a step 400 of mounting each said wedge shaped piece 12a,12b in the tapering nest N of the rope terminal frame F, in particular such that it is movable in the tapering nest N to wedge between a wall W of the tapering nest N and an end of a rope R placed into the tapering nest to compress the end of the rope so as to lock the end of the rope immovably into the nest relative to the rope terminal frame. Figures 3 and 4 illustrate the details of the solution with the wedge shaped piece 2 of the first embodiment. In the second embodiment, the construction is otherwise similar but the wedge shaped piece 2 is replaced with the wedged shaped pieces 12a,12b joined as illustrated in Figure 7. In the second embodiment, in said mounting 400, the wedge shaped pieces 12a,12b are mounted in the tapering nest N of the rope terminal frame F such that they are movable as one unit in the tapering nest N to wedge between a wall W of the tapering nest N and an end of a rope R placed into the tapering nest to compress the end of the rope so as to lock the end of the rope immovably into the nest relative to the rope terminal frame F.

Figure 8 illustrates preferred details for the steps 100 and 200 of the above described method, in accordance with a third embodiment. In this embodiment, a profile bar 21 is extruded, and thereafter a wedge shaped piece 22 is cut from the extruded profile bar 21 for forming a wedge shaped compression member of the rope terminal equipment to be wedged to compress an end E of a rope R. The extruded profile bar 21 has a cross-section constant along the longitudinal direction of the extruded profile bar, wherein the length direction l is the extrusion direction. The profile bar 21 can have any length. In this case, in said extruding 100 a profile bar 21 is extruded, which profile bar 21 comprises on opposite sides a lateral face 23a,23b suitable for forming a face of the wedge shaped piece 22a,22b to be placed against a rope R. Each said lateral face 23a,23b is in the preferred embodiment planar, whereby it can simply exert compression force on a rope R without bending it into a curved form. After the extruding 100 the cutting 200 is performed wherein two wedge shaped pieces 22a,22b for forming a wedge shaped compression member to be wedged to compress an end of a rope are cut from the extruded profile bar 21. The cutting line is presented in the Figure 8. The extruded profile bar 21 has a cross-section constant along the longitudinal direction of the extruded profile bar, wherein the length direction is the extrusion direction. In the cutting 200 the extruded profile bar 21 is cut in cross-direction of the profile 21 along a plane that extends diagonally relative to the longitudinal direction l of the profile bar 21, thereby splitting the extruded profile bar 21 in two wedge shaped pieces 22a,22b. In said cutting 200, the wedge shaped pieces 22a,22b are cut from the extruded profile bar 21 such that a wedge face 23a, 23b of each wedge shaped piece 22a,22b is a section of a planar lateral face 23a,23b of the profile bar 21. The lateral planar faces 23a,23b are parallel, whereby two at least substantially similar wedge shaped pieces 22a,22b can be simply cut with one diagonal cut.

It is preferable, although not necessary, that one or both of said lateral faces 23a,23b of the profile bar 21 has an uneven surface pattern P comprising elongated ridges and valleys between the ridges. In the illustrated embodiment, the uneven surface pattern P is a knurling -pattern. The ridges and valleys preferably extend in the longitudinal direction of the extruded profile bar 21, wherein the length direction is the extrusion direction. Hereby, it is provided that the profile bar 21 can be given by extrusion an uneven surface pattern simply and without extensive machining. The surface pattern P could alternatively be a polyvee -pattern matching with the outer shape of the rope R.

Each wedge shaped piece 22a,22b comprises on opposite sides a first planar wedge face 23a,23b and a second planar wedge face 24a,24b, which are an acute angle (alfa) relative to each other. The angle is preferably less than 45 degrees, more preferably between 2 and 30 degrees, more preferably between 2 and 20 degrees, most preferably between 3 and 15 degrees. Thus, the wedge shaped piece 12a,12b is well suitable for serving as a compression member of a hoisting device.

The first wedge face 23a,23b of the wedge shaped piece 22a,22b is preferably a face for being placed against a rope R and the second lateral face 24a,24b is a face for being placed against an inner wall of a tapered nest N to slide against it for enabling wedging. The first lateral face 23a,23b of the wedge shaped piece 22a,22b cut the extruded profile piece, being in this case intended to be set against the rope R, is provided with an uneven surface pattern P as disclosed. The second lateral face 24a,24b is preferably smooth as disclosed, because thus it can slide without obstructions against another surface.

In the foregoing, the wedge shaped pieces 22a,22b are meant to have an uneven surface pattern. However, the described manufacturing can of course be utilized also if uneven surface patterns are not to be used, in which case the planar lateral faces 23a,23b of the profile bar 21 can be shaped smooth so as to achieve smooth wedge faces 23a,23b for the wedge shaped pieces 22a,22b.

As mentioned, the method further comprises a step 300 of providing a rope terminal frame. A preferred construction for the rope terminal frame F is illustrated in Figures 3 and 4, wherein the rope terminal frame F comprises a tapering nest N suitable for accommodating an end E of a rope R and said wedge shaped piece 22 . After this, the method comprises a step 400 of mounting each said wedge shaped piece 22 in the tapering nest N of the rope terminal frame F, in particular such that it is movable in the tapering nest N to wedge between a wall W of the tapering nest N and an end of a rope R placed into the tapering nest to compress the end of the rope so as to lock the end of the rope immovably into the nest relative to the rope terminal frame F. Figures 3 and 4 illustrate the details of the solution with the wedge shaped piece 2 of the first embodiment. In the second embodiment, the construction is otherwise similar but each wedge shaped piece 2 is replaced with a wedged shaped piece 22a,22b illustrated in Figure 8.

An embodiment of the method for manufacturing a rope terminal arrangement A of a hoisting device comprises manufacturing a rope terminal equipment of a hoisting device as described above, preferably in accordance with the first, second or third embodiment. The method comprises extruding 100 a profile bar 1;11a,11b;21, and thereafter cutting 200 a wedge shaped piece 2;12a,12b;22a,22b from the extruded profile bar 1;11a,11b;21 for forming a wedge shaped compression member to be wedged to compress an end of a rope. The method further comprises providing 300 a rope terminal frame F comprising a tapering nest N suitable for accommodating an end E of a rope R and said wedge shaped piece 2;12a,12b; 22a,22b. The method further comprises mounting 400 the wedge shaped piece 2;12a,12b; 22a,22b and an end E of a rope R into the tapering nest N of the rope terminal frame F, and thereafter wedging the wedge shaped piece 2;12a,12b; 22a,22b in the tapering nest N between a wall W of the tapering nest N and the end E of the rope R to compress the end E of the rope R such that the end E of the rope R is locked into the tapering nest N immovably relative to the rope terminal frame F. The tapering nest N tapers towards an opening O through which the rope R can pass. In the mounting 400 the end E of the rope R is arranged to pass through said opening O. In said wedging, the wedge shaped piece 2;12a,12b; 22a,22b and the rope end E are wedged in the nest N such that they are immovable relative to the wedge frame F towards said opening O. Figure illustrates a rope terminal arrangement A of a hoisting device manufactured by this method.

In the preferred embodiment, in said mounting, the end E of a rope R and said wedge shaped piece 2;12a,12b;22a,22b are mounted into the tapering nest N of the rope terminal frame F such that a face 3;13a,13b;23a,23b of the wedge shaped piece 2;12a,12b; 22a,22b is placed against the end E of the rope R. Thus, it can be the component by which the rope R is directly engaged. The face 3;13a,13b;23a,23b of the wedge shaped piece 2;12a,12b;22a,22b placed against the rope R is planar whereby it can simply exert compression force on a rope R without bending it into a curved form.

In the preferred embodiment, the face 3;13a,13b;23a,23b placed against a rope R is provided with an uneven surface pattern P. The uneven surface pattern P is a toothing or a polyvee or a knurling -pattern or some other pattern comprising elongated ridges and valleys between the ridges. In the preferred embodiment, the face 3;13a,13b;23a,23b of the wedge shaped piece 2;12a,12b;22a,22b placed against a rope R is a section of the aforementioned lateral face 3;13a,13b;23a,23b of the profile bar 1;11a,11b;21.

To make the arrangement A suitable for carrying a load, the method comprises mounting the rope terminal frame F on a fixing base 50,60,70. The hoisting device being an elevator, said fixing base 50,60,70 is an elevator car, a counterweight or a stationary structure 70 of the building wherein the elevator is installed.

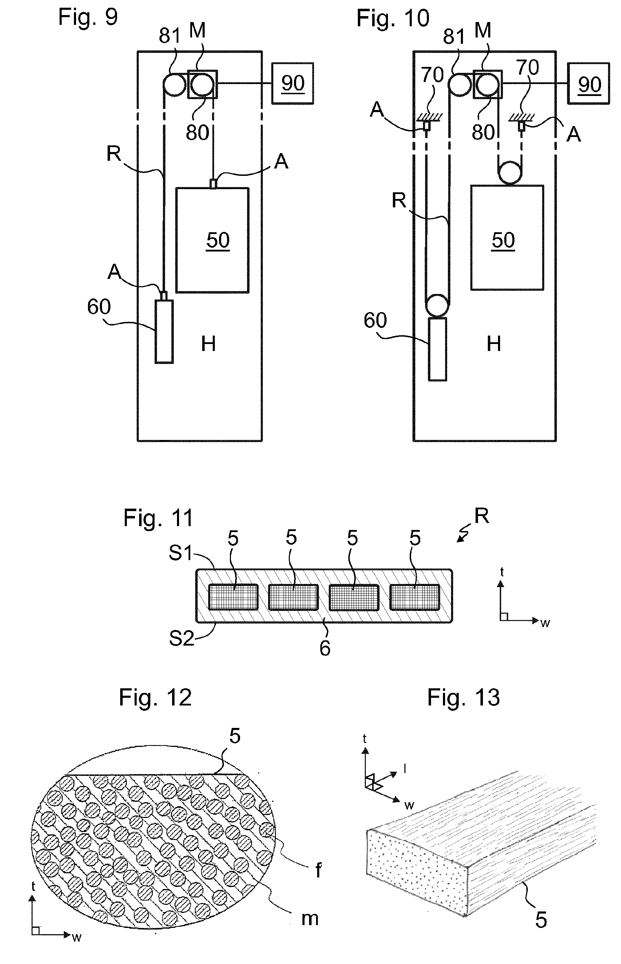

Figures 9 and 10 illustrate preferred embodiments of the elevator utilizing the rope terminal equipement and the rope terminal arrangement A described above. The elevator comprises a hoistway H and elevator units 50,60 vertically movable in the hoistway H. The elevator units 50,60 include in this case an elevator car 50 and a counterweight 60. In both embodiments, the elevator further comprises one or more ropes R, each being connected with said elevator units 50, 60 and having two ends, each end being fixed to a fixing base 50,60,70. Each said rope R suspends the elevator units 50,60 whereto it is connected. Accordingly, the rope R is in this case a suspension rope R of the elevator. Each of said rope ends are fixed with a rope terminal arrangement A to its fixing base 50,60,70. The rope terminal arrangement A is as described elsewhere in the application. The illustrated elevators differ from each other in terms of their suspension ratios, i.e. how the ropes R have been connected with the elevator units 50,60. In the embodiment of Figure 9, the fixing base is for one end of the rope R the elevator unit 50, and for the other end the elevator unit 60. In the embodiment of Figure 10, on the other hand, the fixing base is for both ends of the rope R a stationary structure 70 of the building wherein the elevator is installed.

The elevators illustrated in Figures 9 and 10 are more specifically such that each of them comprises one or more upper rope wheels 80,81 mounted higher than the car 50 and the counterweight 60, in this case particularly in proximity of the upper end of the hoistway H. In this case there are two of said rope wheels 80,81 but the elevator could be implemented also with some other number of rope wheels. Each of said one or more ropes R pass around said one or more rope wheels 80,81 mounted in proximity of the upper end of the hoistway H. In this case the one or more rope wheels 80,81 are mounted inside the upper end of the hoistway H, but alternatively they could be mounted inside a space beside or above the upper end of the hoistway H. Said one or more rope wheels 80,81 comprise a drive wheel 80 engaging said one or more hoisting ropes R, and the elevator comprises a motor M for rotating the drive wheel 80. The elevator car 50 can be moved by rotating the drive wheel 80 engaging each of said ropes R. The elevator further comprises an elevator control unit 90 for automatically controlling rotation of the motor M, whereby the movement of the car 50 is also made automatically controllable. Each of said one or more ropes R is preferably belt-shaped and passes around the one or more rope wheels 80,81 turning around an axis extending in width direction w of the rope R, the wide side thereof, i.e. the side facing in thickness direction t of the rope R, resting against the one or more rope wheels 80,81.

Figure 11 illustrates a preferred structure of the rope R. The rope R is belt-shaped. It is substantially larger in its width direction w than in its thickness direction t. The rope has two opposite planar sides S1,S2 facing in thickness direction t of the rope R. This provides that the rope R can be fixed firmly also without bending it, which would be disadvantageous if the rope has rigid and/or brittle elements. It is not necessary, but it is preferable, that the width/thickness ratio of the rope R is high, preferably at least 2 more preferably at least 4, or even more. In this way a large gripping area as well as a large cross-sectional area for the rope R is achieved. The bending capacity around the width-directional axis being favorable also with rigid materials of the load bearing member, such as composite material. Owing to the wide shape, the rope R suits very well to be used in hoisting appliances, in particular in elevators, wherein the rope R needs to be guided around rope wheels. As above mentioned, the rope R comprises one or more elongated load bearing members 5, which are embedded in a coating 6 forming the outer surface of the rope R and extend parallel to the longitudinal direction l of the rope R unbroken throughout the length of the rope R. It is preferable that each load bearing member 5 is shaped wide, as illustrated. Accordingly, each of said one or more load bearing members 5 is preferably larger in its width direction w than in its thickness direction t of the rope R. Particularly, the width/thickness ratio of each of said one or more load bearing members 5 is then preferably more than 2. Thereby, the bending resistance of the rope R is small but the load bearing total cross sectional area is vast with minimal non-bearing areas.

The coating 6 is preferably made of polymer material. With the coating 6, the rope R is provided with a surface via which the rope R can effectively engage frictionally with a drive wheel of an elevator, for instance. Also, hereby the friction properties and/or other surface properties of the rope are adjustable, independently of the load bearing function, such that the rope perform wells in the intended use, for instance in terms of traction for transmitting force in longitudinal direction of the rope so as to move the rope with a drive wheel. Furthermore, the load bearing members 5 embedded therein are thus provided with protection. The coating 6 is preferably elastic. Elastic polymer material, for example polyurethane provides the rope R the desired frictional properties simply, good wear resistance as well as efficient protection for the load bearing members 5. Polyurethane is in general well suitable for elevator use, but also materials such as rubber or silicon or equivalent elastic materials are suitable for the material of the coating 6. In the embodiment illustrated in Figure 1, there are plurality of the load bearing members 5, which are adjacent each other in width direction w of the rope R. In the present case, there are particularly four of said load bearing members 2 embedded adjacently in said coating 6, but the rope R could alternatively any other number of load bearing members 5. The rope R could also be made to have only one load bearing member 5 or plurality of load bearing members 5 stacked in thickness direction t, for instance.

Said one or more load bearing members 5 is/are preferably, but not necessarily, made of composite material comprising reinforcing fibers f embedded in polymer matrix m, said reinforcing fibers preferably being carbon fibers. With this kind of structure, the rope R has especially advantageous properties in elevator use, such as light weight and good tensile stiffness in longitudinal direction. The load bearing members of this kind are being relatively brittle, e.g. when compared to steel, and prefer gentle fixing. For this reason, the rope terminal equipment/arrangement, as presented, are particularly advantageous in fixing of the rope R. Also, the coating 6 can be safely made of polymer material.

Figure 12 illustrates a preferred inner structure for said load bearing member 5, showing inside the circle an enlarged view of the cross section of the load bearing member 5 close to the surface thereof, as viewed in the longitudinal direction l of the load bearing member 5. The parts of the load bearing member 5 not showed in Figure 12 have a similar structure. Figure 13 illustrates the load bearing member 5 three dimensionally. The load bearing member 2 is made of composite material comprising reinforcing fibers f embedded in polymer matrix m. The reinforcing fibers f are more specifically distributed evenly in polymer matrix m and bound to each other by the polymer matrix m. This has been done e.g. in the manufacturing phase by immersing them together in the fluid material of the polymer matrix which is thereafter solidified. The load bearing member 5 formed is a solid elongated rod-like one-piece structure. Said reinforcing fibers f are most preferably carbon fibers, but alternatively they can be glass fibers, or possibly some other fibers. Preferably, the reinforcing fibers f of each load bearing member 5 are parallel with the longitudinal direction of the load bearing member 5. Thereby, the fibers f are also parallel with the longitudinal direction of the rope R as each load bearing member 5 is oriented parallel with the longitudinal direction of the rope R. This is advantageous for the rigidity as well as behavior in bending. Owing to the parallel structure, the fibers in the rope R will be aligned with the force when the rope R is pulled, which ensures that the structure provides high tensile stiffness. The fibers f used in the preferred embodiments are accordingly substantially untwisted in relation to each other, which provides them said orientation parallel with the longitudinal direction of the rope R. This is in contrast to the conventionally twisted elevator ropes, where the wires or fibers are strongly twisted and have normally a twisting angle from 15 up to 40 degrees, the fiber/wire bundles of these conventionally twisted elevator ropes thereby having the potential for transforming towards a straighter configuration under tension, which provides these ropes a high elongation under tension as well as leads to an unintegral structure. The reinforcing fibers f are preferably long continuous fibers in the longitudinal direction of the load bearing member 5, preferably continuing for the whole length of the load bearing member 5.

The composite matrix m, into which the individual fibers f are distributed, is most preferably made of epoxy, which has good adhesiveness to the reinforcement fibers f and which is known to behave advantageously with reinforcing fibers such as carbon fiber particularly. Alternatively, e.g. polyester or vinyl ester can be used, but any other suitable alternative materials can be used.

The matrix m of the load bearing member 5 is most preferably hard in its material properties. A hard matrix m helps to support the reinforcing fibers f, especially when the rope bends, preventing buckling of the reinforcing fibers f of the bent rope, because the hard material supports the fibers f efficiently. The most preferred materials for the matrix are epoxy resin, polyester, phenolic plastic or vinyl ester. The polymer matrix m is preferably so hard that its module of elasticity (E) is over 2 GPa, most preferably over 2.5 GPa. In this case the module of elasticity E is preferably in the range 2.5-10 GPa, most preferably in the range 2.5-4.5 GPa. There are commercially available various material alternatives for the matrix m which can provide these material properties. However, the polymer matrix need not be this hard necessarily, e.g. if the downsides of a softer material are deemed acceptable or irrelevant for the intended use. In that case, the polymer matrix m can be made of elastomer material such as polyurethane or rubber for instance Preferably over 50% proportion of the surface area of the cross-section of the load bearing member 2 is of the aforementioned reinforcing fiber, preferably such that 50%-80% proportion is of the aforementioned reinforcing fiber, more preferably such that 55%-70% proportion is of the aforementioned reinforcing fiber, and substantially all the remaining surface area is of polymer matrix m. Most preferably, this is carried out such that approx. 60% of the surface area is of reinforcing fiber and approx. 40% is of matrix material (preferably epoxy material). In this way a good longitudinal stiffness for the load bearing member 2 is achieved. As mentioned carbon fiber is the most preferred fiber to be used as said reinforcing fiber due to its excellent properties in hoisting appliances, particularly in elevators. However, this is not necessary as alternative fibers could be used, such as glass fiber, which has been found to be suitable for the hoisting ropes as well. The load bearing members 5 are preferably each completely non-metallic, i.e. made not to comprise metal.

In the illustrated embodiments, the load bearing members 5 are substantially rectangular and larger in width direction than thickness direction. However, this is not necessary as alternative shapes could be used. Likewise, it is not necessary that the number of the load bearing members is four which is used for the purpose of the example. The number of the load bearing members 5 can be greater or smaller. The number can be one, two or three for instance, in which cases it may be preferably to shape it/them wider than what is shown in Figures.

In the preferred embodiments, an advantageous structure for the rope R has been disclosed. However, the invention can be utilized with also other kind of ropes such as with other kinds of belt-shaped ropes having different materials. Also, the outer shape of the rope R could be contoured otherwise than disclosed, such as to have a polyvee shape or toothed shape. In the illustrated examples, the rope is smooth and shaped without uneven surface pattern such as a polyvee pattern or a tooth pattern. However, this is not necessary as the rope could alternatively be provided with an uneven surface pattern such as a polyvee pattern or a tooth pattern. In this case, the compression members can also be provided with an uneven surface pattern forming a counterpart for the uneven surface pattern of the rope.

It is preferable, although not necessary, that in said extruding the profile bar 1;11a,11b;21 is extruded of metal material. Preferably, the material is more specifically aluminum or aluminum alloy, which does not corrode easily and can provide low friction with frame parts without complicated measures. Alternatively, in said extruding the profile bar could be extruded of polymer material.

In the illustrated solutions two of said wedge shaped pieces are configured to receive the rope end E between them. In the above, manufacturing and mounting of wedge shaped pieces on one side of the rope has been described. The method may comprise providing a wedge shaped piece also on the opposite side, preferably in the corresponding manner as above described, and mounting it in the tapering nest N of the rope terminal frame F on an opposite side of the rope than the aforementioned wedge shaped piece, in particular such that it is movable in the tapering nest N to wedge between a wall W of the tapering nest N and an end of a rope R placed into the tapering nest, to compress the end of the rope so as to lock the end of the rope immovably into the nest relative to the rope terminal frame. Using two wedge shaped pieces configured to receive the rope end E between them is, however, not necessary as the solution could alternatively have a wedge shaped piece on only one side of the rope R like in US2014/0182975A1. In this case, a wall of the frame F could be adapted to give reaction force for achieving proper compression, for instance.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A method for manufacturing a rope terminal equipment of a hoisting device, comprising
extruding (100) a profile bar (1;11a,11b;21); and
cutting (200) a wedge shaped piece (2;12a,12b;22a,22b) from the extruded profile bar (1;11a,11b;21) ; and
providing (300) a rope terminal frame (F) comprising a tapering nest (N) suitable for accommodating an end (E) of a rope (R) and said wedge shaped piece (2;12a,12b;22a,22b).

2. A method according to claim 1, wherein the method further comprises mounting (400) the wedge shaped piece (2;12a,12b;22a,22b) in the tapering nest (N) of the rope terminal frame (F).

3. A method according to any of the preceding claims, wherein in said extruding (100) the profile bar (1;11a,11b;21) is extruded of aluminum or aluminum alloy.

4. A method according to any of the preceding claims, wherein the wedge shaped piece (2;12a,12b;22a,22b) comprises on opposite sides a first wedge face (3;13a,13b;23a,23b) and a second wedge face (4;14a,14b;24a,24b) which are planar and at an acute angle (alfa) relative to each other.

5. A method according to any of the preceding claims, wherein at least one wedge face (3;13a,13b;23a,23b) of the wedge shaped piece (2;12a,12b;22a,22b) has an uneven surface pattern (P), said uneven surface pattern (P) preferably comprising elongated ridges and valleys between the ridges.

6. A method according to any of the preceding claims, wherein said profile bar (1;11a,11b;21) comprises one or more planar lateral faces (3;13a,13b; 23a,23b).

7. A method according to any of the preceding claims, wherein the wedge shaped piece (2;12a,12b;22a,22b) is cut from the extruded profile bar (1;11a,11b;21) such that at least one wedge face (3;13a,13b;23a,23b) of the wedge shaped piece (2;12a,12b;22a,22b) is a section of a planar lateral face (3;13a,13b;23a,23b) of the profile bar (1;11a,11b;21).

8. A method according to any of the preceding claims, wherein at least one planar lateral face (3;13a,13b;23a,23b) of the profile bar (1;11a,11b;21) has an uneven surface pattern (P), said uneven surface pattern (P) preferably comprising elongated ridges and valleys between the ridges, which ridges and valleys extend in the longitudinal direction of the extruded profile bar (1;11a,11b;21).

9. A method according to any of the preceding claims, wherein said profile bar (1;11a,11b) has a wedge-shaped cross-section, and in said cutting the wedge shaped piece (2;12a,12b) is cut from an end of the extruded profile bar (1;11a,11b).

10. A method according to any of the preceding claims, wherein said profile bar (1;11a,11b) has a wedge-shaped cross-section, and in said cutting the wedge shaped piece (2;12a,12b) is cut from the extruded profile bar (1;11a,11b) along a plane that is at least substantially orthogonal relative to the longitudinal direction (1) of the profile bar (1;11a,11b).

11. A method according to any of the preceding claims, wherein said profile bar (11a) has a wedge-shaped cross-section and the method further comprises extruding a second profile bar (11b) which second profile bar (11b) has a second wedge-shaped cross-section, wherein said wedge-shaped cross-sections are joinable together such that they together form a larger wedge-shaped cross-section; and said cutting (200) comprises cutting a wedge shaped piece (12a,12b) from each extruded profile bar (11a,11b); and the method comprises joining a wedge shaped piece (12a) from the first profile bar (11a) with a wedge shaped piece (12b) from the second profile bar (11b) such that they together form a larger wedge shaped piece.

12. A method according to any of the preceding claims, wherein in said cutting the extruded profile bar (21) is cut in cross-direction of the profile (21) along a plane that extends diagonally relative to the longitudinal direction (1) of the profile bar (21), thereby splitting the extruded profile bar (21) in two wedge shaped pieces (22).

13. A method for manufacturing a rope terminal arrangement (A) of a hoisting device comprising
manufacturing a rope terminal equipment of a hoisting device as defined in any of the preceding claims,
mounting (400) said wedge shaped piece (2;12a,12b;22a,22b) and an end (E) of a rope (R) into the tapering nest (N) of the rope terminal frame (F);
wedging the wedge shaped piece (2;12a,12b;22a,22b) in the tapering nest (N) to compress the end (E) of the rope (R) for locking the end (E) of the rope (R) into the tapering nest (N) immovably relative to the rope terminal frame (F).

14. A method according to any of the preceding claims, wherein in said mounting, the end (E) of a rope (R) and said wedge shaped piece (2;12a,12b;22a,22b) are mounted into the tapering nest (N) of the rope terminal frame (F) such that a planar wedge face (3;13a,13b;23a,23b) of the wedge shaped piece (2;12a,12b;22a,22b) is placed against the end (E) of the rope (R).

15. A method according to any of the preceding claims, wherein the wedge face (3;13a,13b;23a,23b) of the wedge shaped piece (2;12a,12b;22a,22b) placed against a rope (R) is a section of a lateral face (3;13a,13b;23a,23b) of the profile bar (1;11a,11b;21).

16. A method according to any of the preceding claims, wherein, the rope (R) comprises one or more elongated load bearing members (2) embedded in a coating (3) forming the outer surface of the rope (R) and extending parallel with the longitudinal direction (1) of the rope (R) unbroken throughout the length of the rope (R), which load bearing members (2) are made of composite material comprising reinforcing fibers (f) embedded in polymer matrix (m), said reinforcing fibers (f) preferably being carbon fibers.

17. An elevator, which comprises a rope terminal arrangement (A) obtained with a method defined in any of the preceding claims, the rope terminal arrangement (A) fixing an end (E) of a rope (R) of the elevator to a fixing base (50,60,70).
